# EUROPÄISCHE PATENTSCHRIFT

(11) **EP 0 854 312 B1**
(45) Veröffentlichungstag und Bekanntmachung des Hinweises auf die Patenterteilung: **29.11.2000**
(21) Anmeldenummer: 98100730.5
(22) Anmeldetag: 16.01.1998
(51) Int. Cl.: F16L 3/227

(54) **Rohrbefestigungselement**
Pipe fastening element
Dispositif de fixation d'un tuyau

(30) Priorität: 17.01.1997 DE 19701526
(43) Veröffentlichungstag der Anmeldung: 22.07.1998
(73) Patentinhaber: Karl, Reinhard, 88171 Weiler (DE)
(72) Erfinder: Karl, Reinhard, 88171 Weiler (DE)
(74) Vertreter: Riebling, Peter, Dr.-Ing.

(56) Entgegenhaltungen:
- EP-B- 0 503 566
- DE-A- 3 427 173
- DE-A- 3 818 362
- DE-U- 9 108 071

## Beschreibung

Die Erfindung betrifft ein Rohrbefestigungselement zum Festlegen eines Rohres an einer Bauwerksfläche nach dem Oberbegriff des Hauptanspruches 1.

Bei einem solchen, aus dem DE 295 12 650 U1 bekannten Rohrbefestigungselement bildet der schmale bandförmige Teil einen Trägerkörper aus Kunststoff, in dem Öffnungen für das Durchführen von Fixierungselementen auf der Bauwerksfläche und zu den Querseiten parallele Schlitze ausgebildet sind, in welche im Schnappsitz Hakenleisten einsteckbar sind, die auf einer Seite einer plattenförmigen Halteeinrichtung ausgebildet sind. Auf der anderen Seite der plattenförmigen Halteeinrichtung sind zwei einander zugewölbte Halteelemente ausgebildet, die zwischen sich einen Aufnahmeraum für die Aufnahme eines Rohres bilden, das zwischen die Halteelemte von der der plattenförmigen Halteeinrichtung gegenüberliegenden Seite eingedrückt werden kann, weil sich die Halteelemente elastisch nach außen voneinander entfernen lassen und nach dem Eindrücken des Rohres wieder in ihre Ausgangslage zurückgehen und dabei das Rohr elastisch klemmend umschließen.

Mit dem bekannten Rohrbefestigungselement lassen sich Rohre in den durch die Schlitze im bandförmigen Teil vorgegebenen Positionen anordnen. Beim Einpressen eines Rohres zwischen die Halteelemente kann es bei Überdehnung zu deren Bruch kommen.

Deshalb ist nur ein beschränkter Umgreifungswinkel möglich. Dies beeinträchtigt den sicheren Halt der Rohre und vor allem außen isolierter Rohre sehr stark. Wenn das Rohr eine weiche Isolierung trägt, die bei Kälteisolierungen noch mit einer Aluminiumfolie ummantelt ist, besteht die Gefahr, daß diese beim Einpressen zwischen die Halteelemente beschädigt werden.

Mit der DE 34 27 173 A1 ist eine Reihenklammer für die Befestigung von Kabeln bekannt geworden, wobei die Reihenklammer aus einer C-Schiene zur Befestigung auf einer Unterlage besteht und an dieser C-Schiene Befestigungsglieder zur Befestigung von Kabeln vorgesehen sind. Diese Befestigungsglieder bestehen aus in der C-Schiene befindlichen federnd spreizbaren Halteteilen und einem außerhalb der C-Schiene liegenden Stützteil, sowie einem keilförmigen Spannglied, welches zwischen den Halteteilen so eingespannt werden, daß die Halteteile und der Stützteil zusammen an den Schenkeln der C-Schiene klemmend gehalten werden kann und zwischen zwei benachbarten Stützteilen ein Kabel eingeklemmt wird. Das Spannglied selbst besteht aus einem den Stützsteil durchdringenden und zwischen den Halteteilen einschlagbaren, langgestreckten Nagel.

Zur Befestigung eines Kabels wird dieses also auf ein Stützteil gelegt und ein darüber befindliches Stützteil auf das Kabel heruntergeführt, danach wird das keilförmige Spannglied in Form eines Nagels in das Stützteil eingeschlagen und somit die Halteteile in der C-Schiene federnd verspreizt. Somit wird zum einen das Kabel zwischen zwei Stützteilen klemmend gehalten und zum anderen die Stützteile federnd in der C-Schiene reibschlüssig verspreizt.

Nachteil dieser Halterung für Kabel bzw. Rohre ist, daß die Befestigungsglieder bzw. die Stützteile innerhalb der C-Schiene lediglich reibschlüssig gehalten werden und dadurch eine gewisse Unsicherheit des Haltens des Kabels herrscht.

Diese Unsicherheit der Halterung rührt daher, daß zum einen während des Einschlagens des keilförmigen Spanngliedes die beiden Stützteile wieder auseinander rutschen können und somit die zuvor eingestellte Klammerung des Kabels wiederum etwas gelockert wird. Zum anderen ist die Tiefe des Einschlages des keilförmigen Spanngliedes zwar durch die Stirnfläche des Stützteiles definiert, jedoch kann es sein, daß gerade bei einer raschen Montage das keilförmige Spannglied nicht vollständig eingeschlagen wird und dadurch die reibschlüssige Verbindung vom Halteteil zur C-Schiene nicht optimal ist und die Stützteile verrutschen können und damit die Kabelbefestigung unsicher ist.

Auch kann es sein, daß durch Bewegungen der Kabel nach erfolgter Montage oder bei der Montage einer weiteren C-Schiene, welche beabstandet von dieser C-Schiene ist, sich die reibschlüssige Verbindung wiederum etwas lockert oder gar gänzlich löst.

Auch ist bei dieser Reihenklammer für die Halterung von Kabeln nach dem Stand der Technik es nur erschwert möglich diese Halterung nachträglich wieder zu lösen, um das Kabel aus der Halterung wieder zu entfernen, da ja das keilförmige Spannglied wieder aus dem Stützteil herausgeführt werden muß.

Insgesamt ist also diese Ausführungsform der Halterung für Kabel deshalb mit Unsicherheit behaftet, da die Verbindung von C-Schiene zu dem Befestigungsgliedern lediglich reibschlüssig erfolgt und dadurch keine exakt definierte Verbindungskraft zwischen diesen beiden Elementen herrscht.

Zudem ist die Konstruktion der Reihenklammer gemäß der DE 34 27 173 A1 relativ kompliziert aufgebaut und daher relativ kostenintensiv und anfällig gegen Beschädigungen.

Die der Erfindung zugrunde liegende Aufgabe besteht deshalb darin, das Rohrbefestigungselement der eingangs genannten Art so auszugestalten, daß sich insbesondere von Isolierungen umschlossene Rohre beschädigungsfrei in jeder gewünschten Position an dem Rohrbefestigungselement auf einfache Weise festlegen lassen, und daß das Rohrbefestigungselement ein sichereres Festlegen des Rohres ermöglicht und durch eine einfachere Konstruktion ausgeführt ist.

Diese Aufgabe wird ausgehend von den Rohrbefestigungselementen der eingangs genannten Art dadurch gelöst, daß dieses Rohrbefestigungselement zum festlegen eines Rohres an einer Bauwerksfläche einen an die Außenform einer Isolierung des Rohres angepaßten Aufnahmeraum besitzt und der bandförmige Teil eine längsmittige Aufwölbung mit beabstandeten Rastlöchern aufweist, auf der in einer umgreifenden Führung die zwei Halteabschnitte verschiebbar sitzen, von denen jeder eine Rastzunge für den lösbaren Eingriff mit Rastlöchern aufweist.

Vorteil hierbei ist, daß durch das Einbringen der Rastlöcher in den bandförmigen Teil und das lösbare Einrasten der Rastzungen der Halteabschnitte in diese Rastlöcher eine formschlüssige Verbindung zwischen dem bandförmigen Teil und der Halteeinrichtung erreicht wird und somit das Rohr mit einer relativ exakt definierten Kraft in einer definierten Position gehalten werden kann. Hierbei sind die Rastlöcher innerhalb des bandförmigen Teiles innerhalb einer längsmittigen Aufwölbung eingebracht, um die Rastzungen der Halteabschnitte in geeigneter Weise einrasten zu lassen.

Bei Verwendung des erfindungsgemäßen Rohrbefestigungselementes ist es möglich, den schmalen bandförmigen Teil an der Bauwerksfläche zu fixieren, das die meist weiche Außenisolierung aufweisende Rohr in der vorgegebenen Position anzuordnen und dann die beiden Halteabschnitte mit ihren Halteelementen auf dem bandförmigen Teil so weit zu verschieben, daß die Isolierung des Rohres zwischen Halteelementen fest eingeschlossen ist, wobei diese Position der Halteabschnitte auf dem bandförmigen Teil auf einfache Weise fixiert werden kann. Bei dieser Art der Montage kann eine Beschädigung der Isolierung des Rohres nicht auftreten. Außerdem läßt sich das außen isolierte Rohr in jeder gewünschten Position auf einfache Weise bezüglich der Bauwerksfläche festlegen. Die Breite der Halteelemente, d.h. bezogen auf ein Rohr ihre axiale Erstreckung, kann problemlos an die Tragfähigkeit der Isolierung angepaßt werden.

Für die Lagefixierung der Halteabschnitte mit ihrem jeweiligen Halteelement wird zweckmäßigerweise eine kraftschlüssige Festlegung auf dem bandförmigen Teil vorgesehen.

Der bandförmige Teil kann dabei eine längsmittige Aufwölbung mit beabstandeten Rastlöchern aufweisen, auf der in einer umgreifenden Führung die zwei Halteabschnitte verschiebbar sitzen, von denen jeder eine Rastzunge für den lösbaren Eingriff mit den Rastlöchern aufweist. Vorteilhafterweise ist die umgreifende Führung als Schwalbenschwanzführung ausgebildet.

Vor allem dann, wenn die Bauwerksfläche eine Decke ist, können die Haltelemente an ihrem freien Ende eine Verbindungseinrichtung aufweisen, die aus einem Ansatz an dem freien Ende eines jeden Halteelements mit einer Bohrung besteht, durch die eine Schraube hindurchführbar ist, die an dem einen Ansatz mit ihrem Kopf und an dem anderen Ansatz durch eine aufschraubbare Klemmmuter gehalten ist.

Die Montage läßt sich dadurch vereinfachen, wenn in jedem Halteelement bereits eine Isolierhalbschale für das Rohr angeordnet ist, von denen jede eine Bohrung für den Durchgang der Schraube aufweist. Durch die Verschraubung ist ein Auffedern der Halterung bei eingebrachtem Rohr nicht möglich.

Mit dem erfindungsgemäßen Rohrbefestigungselement lassen sich auch Rohrisolierstücke halten, wie sie aus der EP 0 503 566 B1 bekannt sind.

Anhand von Zeichnungen werden Ausführungsbeispiele der Erfindung näher erläutert. Es zeigt
- Fig. 1: perspektivisch eine erste Ausführungsform des Befestigungselements,
- Fig. 2: in einer Ansicht wie Fig. 1 eine zweite Ausführungsform des Befestigungselements mit integrierten Isolierschalen,
- Fig. 3: in einer schematischen, teilweise geschnittenen Seitenansicht eine dritte Ausführungsform des Befestigungselements, wobei der bandförmige Teil nicht dargestellt ist, und
- Fig. 4: in einer Ansicht wie Fig. 1 das Befestigungselement mit einer verstärkten Halterung.

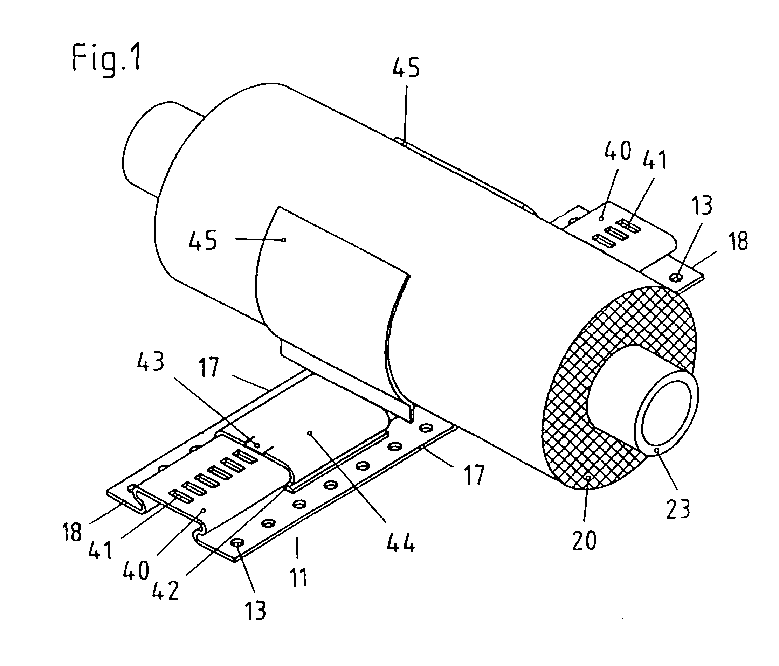

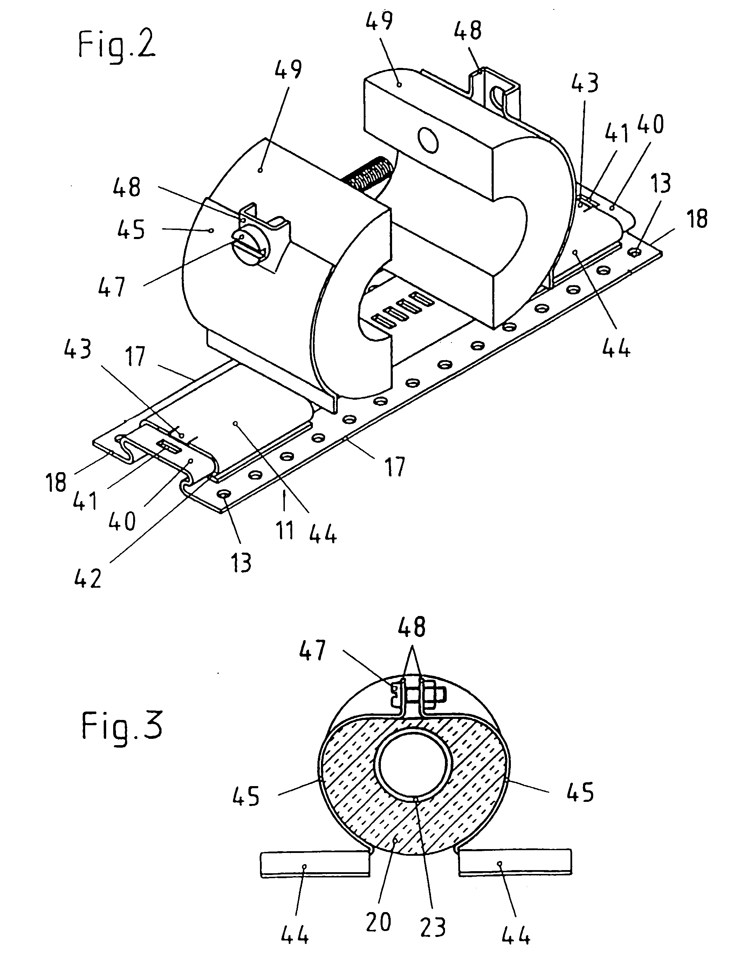

Das in Fig. 1 und 2 gezeigte Befestigungselement besteht aus einem bandförmigen Teil 11 mit im wesentlichen rechteckiger Form. Der bandförmige Teil 11 hat zwei gegenüberliegende Längsseiten 17 und zwei gegenüberliegende Querseiten 18. Der bandförmige Teil 11 hat parallel zu seinen Längsseiten 17 in einer Reihe im Abstand angeordnete Löcher 13 für die Befestigung an einer nicht gezeigten Bauwerksfläche. In Richtung einer Querseite 18 hat der bandförmige Teil 11 eine Aufwölbung 40 mit parallel zu den Längsseiten 17 verlaufenden Hinterschneidungen für eine hintergreifende Führung 42, beispielsweise eine Schwalbenschwanz- oder C-förmige Führung, und mit auf seiner Oberseite im Abstand angeordneten Rastlöchern 41.

Bei dem gezeigten Ausführungsbeispiel sind zwei Halteabschnitte 44 vorgesehen, von denen jeder nach unten in die Schwalbenschwanzführung parallel zu den Längsseiten 17 eingebogen ist, an dem der Querseite 18 zugewandten Ende eine Rastzungen 43 für den lösbaren Eingriff in eines der Rastlöcher 41 trägt und am gegenüberliegenden Ende ein nach oben stehendes Halteelement 45 abstützt, das zylindrisch gebogen ist, so daß zwischen den beiden Halteelementen 45 der beiden Halteabschnitte 44 eine zylindrische Isolierung 20 gehalten werden kann, die ein Rohr 23 konzentrisch biegesteif umschließt.

Das in Fig. 2 gezeigte Befestigungselement entspricht in seinem grundsätzlichen Aufbau dem von Fig. 1. Zusätzlich zu der Ausgestaltung von Fig. 1 ist an jedem Halteelement 45 in der Längsmitte seines freien Endes ein Ansatz 48 mit einer Bohrung vorgesehen. Durch die Bohrungen der Ansätze 48 ist eine Schraube 47 hindurchführbar und mit einer Mutter an dem dem Kopf der Schraube 47 gegenüberliegenden Ende am anderen Ansatz 48 festlegbar. Wenn eine zylindrische Isolierung vorgesehen ist, die die Halteelemente 45 nicht vollständig umschließen, muß für den Durchgang der Schraube 47 eine entsprechende Bohrung in der Isolation vorgesehen werden. Die Vornahme einer solchen Bohrung ist auf der Baustelle manchmal schwierig durchführbar. Deshalb ist bei dem gezeigten Ausführungsbeispiel in jedem der Halteelemente 45 bereits eine Halbschale 49 aus entsprechendem Isoliermaterial mit einer Bohrung integriert, die zu den Bohrungen in den Ansätzen 48 ausgerichtet ist. Auf der Baustelle wird dann das isolierte Rohr im Bereich der Halbschalen 49 abisoliert und zwischen den Halbschalen 49 eingeführt, die dann durch Verschieben der Halteabschnitte 44 aufeinander zu und nach entsprechender Lagefixierung der Halteabschnitte 44 den abisolierten Rohrabschnitt umschließen und nach Durchführen der Schraube 47 durch die Bohrungen in den Ansätzen 48 und in den Halbschalen 49 und nach Anbringen der nicht gezeigten Sicherungsmutter halten, so daß der bandförmige Teil 11 auch hängend an einer Decke als Bauwerksfläche befestigt werden kann.

Wenn ein nicht isoliertes Rohr gehalten werden soll, entfällt eine Abisolierung. Die Halbschalen 49 aus Isoliermaterial verhindern dann eine Kälte- oder Wärmebrücke zwischen dem Rohr und der Bauwerksfläche. Die Halbschalen 49 können seitlich bzw. auf das Rohr bezogen axial ein- oder beidseitig über die Halteelemente 45 vorstehen.

Die Ansätze 48 können aber auch so weit über die Halbschalen 49 hochstehend vorgesehen werden, daß sich die Schraube 47 oberhalb der Halbschalen 49 durch die Bohrungen in den Ansätzen 48 erstreckt, so daß eine Bohrung durch die Halbschalen 49 nicht erforderlich ist.

Bei der in Fig. 3 gezeigten Isolierung in Form eines oben abgeflachten Ovals sind die Halteelemente 45 an ihren freien Enden nach oben zu vertikalen Ansätzen 48 in Form von Stegen mit Bohrungen abgebogen, durch die eine Schraube hindurchgeführt und durch eine Mutter gekontert ist, wodurch die entsprechend der Außenkontur der Isolierung 20 gebogenen Halteelemente 45 die Isolierung 20 klemmend und tragend umschließen, so daß der bandförmige Teil dieser Ausführungsform, der in Fig. 3 nicht gezeigt ist, ebenfalls auch an einer Decke als Bauwerksfläche hängend befestigt werden kann.

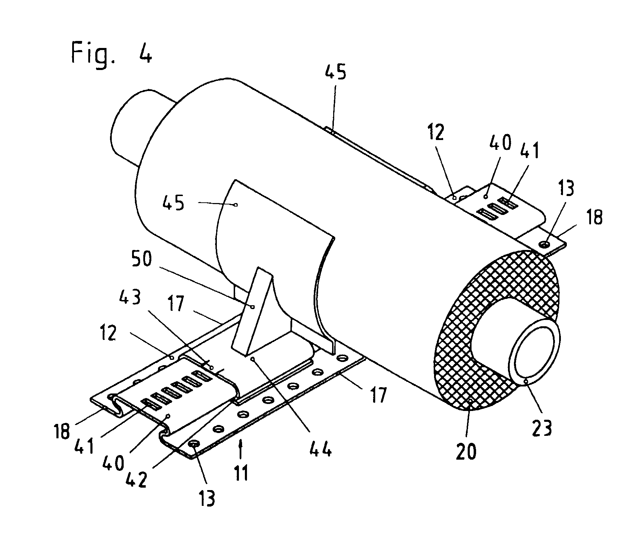

Die Ausgestaltung des Befestigungselements von Fig. 4 entspricht im wesentlichen der von Fig. 1, wobei zwischen jedem Halteelement 45 und seinem zugehörigen Halteabschnitt 44 ein Verstärkungselement 50, beispielsweise ein Knotenblech, zur Aussteifung der Befestigung zwischen Halteelement 45 und Halteabschnitt 44 vorgesehen ist.

## Patentansprüche

1. Rohrbefestigungselement zum Festlegen eines Rohres (23) an einer Bauwerksfläche
- mit einem schmalen bandförmigen Teil (11), der zwei Querseiten (18) und zwei Längsseiten (17) aufweist und der mit seiner einen Fläche an der Bauwerksfläche anliegend daran befestigbar ist, und
- mit einer Halteeinrichtung (42 - 45), die auf dem bandförmigen Teil (11) in verschiedenen Positionen lagefixierbar angeordnet ist und zwei einander zugewandte Halteelemente (45) aufweist, die zwischen sich einen Aufnahmeraum bilden,
- wobei die Halteeinrichtung (42 - 45) zwei Halteabschnitte (44) aufweist, die auf dem bandförmigen Teil (11) verschiebbar angeordnet sind, und
- wobei jeder der Halteabschnitte (44) an seinem einen schmalen Ende ein Halteelement (45) trägt, dadurch gekennzeichnet,
- daß der Aufnahmeraum der Außenform einer Isolierung (20) angepaßt ist, die das Rohr (23) umschließt und daß der bandförmige Teil (11) eine längsmittige Aufwölbung (40) mit beabstandeten Rastlöchern (41) aufweist, auf der in einer umgreifenden Führung (42) die zwei Halteabschnitte (44) verschiebbar sitzen, von denen jeder eine Rastzunge (43) für den lösbaren Eingriff mit Rastlöchern (41) aufweist.

2. Befestigungselement nach Anspruch 1, dadurch gekennzeichnet, daß für die Lagefixierung der Halteabschnitte (44) mit ihrem jeweiligen Halteelement (45) eine kraftschlüssige Festlegung auf dem bandförmigen Teil (11) vorgesehen ist.

3. Befestigungselement nach einem der Ansprüche 1 oder 2, dadurch gekennzeichnet, daß die umgreifende Führung (42) eine Schwalbenschwanzführung ist.

4. Befestigungselement nach einem der Ansprüche 1 bis 3, dadurch gekennzeichnet, daß die Halteelemente (45) an ihren freien Enden eine Verbindungseinrichtung (47, 48) aufweisen.

5. Befestigungselement nach Anspruch 4, dadurch gekennzeichnet, daß die Verbindungseinrichtung aus einem Ansatz (48) an dem freien Ende eines jeden Halteelements (45) mit einer Bohrung besteht, durch die eine Schraube (47) hindurchgeführt ist, auf der eine Klemmutter aufschraubbar ist.

6. Befestigungselement nach Anspruch 5, dadurch gekennzeichnet, daß in jedem Halteelement (45) eine Halbschale (49) aus isolierendem Material für das Rohr (23) integriert ist, von denen jede eine Bohrung für den Durchgang der Schraube (47) aufweist.

7. Befestigungselement nach Anspruch 6, dadurch gekennzeichnet, daß die in die Halteelemente (45) integrierten Halbschalen 849) aus isolierendem Material seitlich über die Halteelemente (45) vorstehen.

## Claims

1. Pipe fastening element for fixing a pipe (23) to a building surface
- with a narrow strip part (11) which has two transverse sides (18) and two longitudinal sides (17) and is attachable to the building surface with one face in contact therewith, and
- with a holder device (42 - 45) which is fixable in various positions on the strip part (11) and has two holder elements (45) facing each other which between them form a holding space,
- in which the holder device (42 - 45) has two mounting sections (44) which are slidably arranged on the strip part (11), and
- in which each of the mounting sections (44), at one of its narrow ends, carries a holder element (45), characterized
- in that the holding space is adapted to the outer form of insulation (20) which surrounds the pipe (23) and in that the strip part (11) has a longitudinal central arch (40) with catch holes (41) spaced at intervals, on which the two mounting sections (44) are slidably seated in a clasping guide (42), each mounting section (44) having a snap-in latch (43) for releasable engagement with catch holes (41).

2. Fastening element according to Claim 1, characterized in that a positive attachment to the strip part (11) is provided for fixing the mounting sections (44) in position on their respective holder elements (45).

3. Fastening element according to Claim 1 or 2, characterized in that the clasping guide (42) is a dovetail guide.

4. Fastening element according to any one of Claims 1 to 3, characterized in that the holder elements (45) have a connector device (47, 48) at their free ends.

5. Fastening element according to Claim 4, characterized in that the connector device consists of a lug (48) at the free end of each holder element (45), with a hole through which is passed a bolt (47), on which a tightening nut is screwable.

6. Fastening element according to Claim 5, characterized in that a half-shell (49) of insulating material for the pipe (23), provided with a hole for the passage of the bolt (47), is incorporated in each holder element (45).

7. Fastening element according to Claim 6, characterized in that the half-shells (49) of insulating material incorporated in the holder elements (45) project laterally beyond the holder elements (45).

## Revendications

1. Elément de fixation de tuyau pour immobiliser un tuyau (23) sur une surface de bâtiment, comportant
- un élément étroit en forme de bande (11) qui présente deux côtés transversaux (18) et deux côtés longitudinaux (17) et qui est apte à être fixé à plat, avec une de ses surfaces, à la surface de bâtiment, et
- un dispositif de fixation (42-45) qui est disposé sur l'élément en forme de bande (11) pour pouvoir être fixé dans différentes positions, et qui présente deux éléments de fixation (45) tournés l'un vers l'autre qui définissent entre eux un logement,
- étant précisé que le dispositif de fixation (42-45) présente deux sections de fixation (44) qui sont disposées, mobiles, sur l'élément en forme de bande (11),
- et que chacune des sections de fixation (44) porte à une extrémité étroite un élément de fixation (45),
caractérisé en ce que le logement est adapté à la forme extérieure d'une isolation (20) qui entoure le tuyau (23), et en ce que l'élément en forme de bande (11) présente une partie bombée (40) située au centre, longitudinalement, et pourvue de trous d'encliquetage espacés (41), sur laquelle sont prévues, mobiles dans un guidage enveloppant (42), les deux sections de fixation (44) qui comportent chacune une languette d'encliquetage (43) pour venir en prise de manière amovible avec les trous d'encliquetage (41).

2. Elément de fixation selon la revendication 1, caractérisé en ce qu'il est prévu, pour le positionnement des sections de fixation (44) avec leur élément de fixation (45), un blocage par force sur l'élément en forme de bande (11) .

3. Elément de fixation selon la revendication 1 ou 2, caractérisé en ce que le guidage enveloppant (42) est constitué par un guidage en queue d'aronde.

4. Elément de fixation selon l'une des revendications 1 à 3, caractérisé en ce que les éléments de fixation (45) présentent à leur extrémité libre un dispositif de liaison (47, 48).

5. Elément de fixation selon la revendication 4, caractérisé en ce que le dispositif de liaison se compose d'une pièce rapportée (48) à l'extrémité libre de chaque élément de fixation (45), avec un perçage traversé par une vis (47) sur laquelle un écrou de blocage peut être vissé.

6. Elément de fixation selon la revendication 5, caractérisé en ce qu'il est prévu, intégré dans chaque élément de fixation (45), une demi-coquille (49) en matériau isolant pour le tuyau (23), chaque demi-coquille présentant un perçage pour le passage de la vis (47).

7. Elément de fixation selon la revendication 6, caractérisé en ce que les demi-coquilles (49) en matériau isolant qui sont intégrées dans les éléments de fixation (45) dépassent latéralement de ces derniers.
